# EUROPEAN PATENT APPLICATION

(11) **EP 4 252 518 A1**
(43) Date of publication of application: **04.10.2023**
(21) Application number: 23165426.0
(22) Date of filing: 30.03.2023
(51) Int. Cl.: A01D 34/00, A01D 34/63, A01D 34/64, A01D 34/71

(54) **MOWER**

(30) Priority: 01.04.2022 JP 2022061676
(71) Applicant: Iseki & Co., Ltd., Matsuyama-shi, Ehime 799-2692 (JP)
(72) Inventor: BABA, Yusuke, Ehime-ken, 791-2193 (JP)
(74) Representative: TBK

(57) **Abstract**

In the related art, in a case of performing a grass collecting operation, no appropriate place is provided for a detached mulching cover. In many cases, the mulching cover is placed in a barn or the like. Therefore, in a case of switching to a mulching operation during a grass mowing operation, it is troublesome to go to the barn to get the mulching cover. Provided is a mower which includes a main body 1 of the mower, a mowing device 6, a grass collecting container 4, a conveyance path 7 from the mowing device 6 to the grass collecting container 4, and a detachable mulching cover 20 configured to block the conveyance path 7. The mowing device 6 is provided with a cover fixing portion 17 configured to fix the mulching cover 20 removed to open the conveyance path 7.

## Description

### BACKGROUND OF THE INVENTION

### 1. Field of the Invention

The present invention relates to a mower.

### 2. Description of Related Art

There is known a riding lawn mower which includes a mowing device for mowing grass and a grass collecting container for collecting and containing the mowed grass, in which a mulching cover capable of blocking a connection of the mowing device to a passage between the mowing device and the grass collecting container is detachably provided in the passage (PTL 1).

In such a riding lawn mower, when performing a mulching operation of finely mowing on the spot without collecting the mowed grass, the passage is blocked due to attachment of the mulching cover to the mowing device, and when collecting the mowed grass, the passage is opened by removing the mulching cover. The riding lawn mower works by switching between the mulching operation and the grass collecting operation.

### Citation List

### Patent Literature

PTL 1: JP2019-47757A

### SUMMARY OF THE INVENTION

However, in the case of performing the grass collecting operation, no appropriate place is provided for the detached mulching cover. In many cases, the mulching cover is placed in a barn or the like. Therefore, in a case of switching to a mulching operation during a grass mowing operation, it is troublesome to go to the barn to get the mulching cover.

It is an object of the invention to provide a mower capable of easily switching between a case of performing a mulching operation and a case of performing a grass collecting operation.

According to a first aspect of the invention, a mower includes:
a conveyance path from a mowing device to a grass collecting container;
a detachable mulching cover configured to block the conveyance path; and
a cover fixing portion configured to fix the mulching cover removed to open the conveyance path.

As a result, it is possible to easily switch between the case of performing the mulching operation and the case of performing the grass collecting operation.

According to a second aspect of the invention, in the mower according to the first aspect of the invention,
a lifting arm configured to lift and lower the mowing device is coupled to a main body of the mower, and a pair of lifting arm coupling portions of the lifting arm to the mowing device are provided on left and right sides on the mowing device, and
the cover fixing portion is provided between the pair of left and right lifting arm coupling portions.

As a result, the mulching cover can be fixed to the mowing device without interfering with lifting and lowering of the mowing device.

According to a third aspect of the invention, in the mower according to the first or the second aspect of the invention,
the mowing device has a plurality of cutting blades, and a cutting blade interlocking shaft configured to interlock the plurality of cutting blades is provided in an upper portion of the mowing device,
a mower input shaft extending from the main body of the mower is provided behind the cutting blade interlocking shaft, and
the cover fixing portion is provided in front of the cutting blade interlocking shaft.

As a result, the mulching cover can be fixed in an empty space of the mowing device.

According to a fourth aspect of the invention, in the mower according to any one of the first to the third aspects of the invention,
the cover fixing portion fixes the mulching cover on the mowing device at two positions, one on an outer side and one on an inner side and close to a central portion when a left-right direction is taken as reference, and a fixed height on the outer side is higher than a fixed height on the inner side.

As a result, it is possible to lower a height of a fixing position of the mulching cover on a center side, and it is easy to avoid interference with the main body side when the mowing device is lifted.

According to a fifth aspect of the invention, in the mower according to any one of the first to the fourth aspects of the invention,
the mulching cover is disposed such that when the mowing device is lifted, a part of the mulching cover is positioned between a license plate in a front portion of the main body of the mower and a frame in the front portion of the main body of the mower.

As a result, when the mowing device is lifted, the mulching cover can be prevented from interfering with the main body.

According to the invention, it is possible to easily switch between a case of performing a mulching operation and a case of performing a grass collecting operation.

### BRIEF DESCRIPTION OF THE DRAWINGS

FIG. 1 is a side view of a mower according to an embodiment of the invention;
FIG. 2 is a perspective view of a mowing device of the mower;
FIG. 3 is a perspective view of the mowing device as viewed from a lower side;
FIG. 4 is a plan view of the mowing device;
FIG. 5 is a perspective view of a mulching cover of the mowing device;
FIG. 6 is a perspective view of a part of a deck portion of the mowing device;
FIG. 7 is a perspective view of an outer fixing member of the mowing device;
FIG. 8 is a perspective view of a knob bolt of the mowing device;
FIG. 9 is a perspective view of an inner fixing member of the mowing device;
FIG. 10 is a perspective view in which the mulching cover is fixed to the deck portion;
FIG. 11 is a perspective view of a stock base of the mowing device;
FIG. 12 is a perspective view in which shear pins are inserted into the stock base of FIG. 11;
FIG. 13 is a perspective view of cover fixing portions on the deck portion of the mowing device;
FIG. 14 is a perspective view illustrating a state in which the mowing device is lifted to an uppermost position;
FIG. 15 is a plan view of a mowing device of a modification according to the embodiment of the invention;
FIG. 16 is a perspective view of a state in which the mowing device of FIG. 15 is lifted to an uppermost position as viewed from a front side; and
FIG. 17 is a side perspective view of the state in which the mowing device of FIG. 15 is lifted to the uppermost position as viewed from a left side.

### DESCRIPTION OF EMBODIMENTS

Hereinafter, an embodiment of the invention will be described in detail with reference to the drawings.

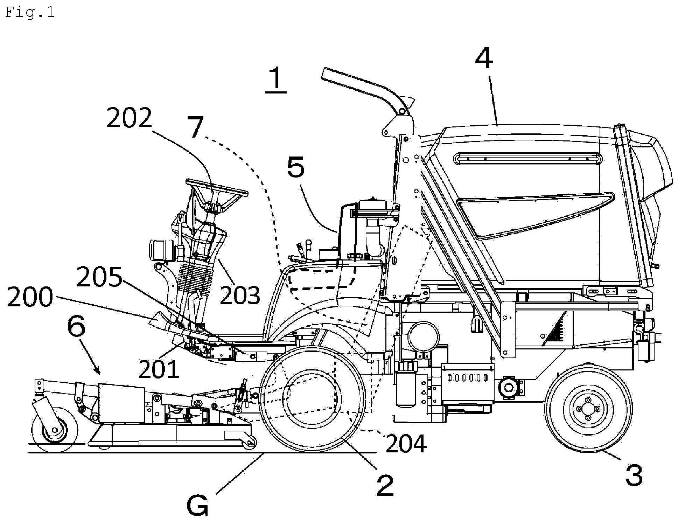

FIG. 1 is a mower according to the embodiment of the invention. In the following, front and rear, left and right, and up and down are defined using a traveling direction of the mower as a reference as viewed from an operator who drives the mower.

In FIG. 1, front wheels 2 and rear wheels 3 are provided in a lower portion of a main body 1 of the mower, a grass collecting container 4 is mounted in an upper side of a rear portion, and a driver seat 5 is provided in a front side.

Further, a mowing device 6 is coupled to a lower front side of the main body 1. A conveyance path 7 for conveying grass mowed by the mowing device 6 to the grass collecting container 4 is provided between the grass collecting container 4 and the mowing device 6. G denotes ground.

A handle 202 and a steering post 203 are disposed in front of the driver seat 5. A license plate 200 is mounted to a foremost portion. Reference numeral 201 denotes a frame member of the main body 1. Reference numeral 204 denotes a blower which is provided on the conveyance path 7 and sucks and conveys the mowed grass. Reference numeral 205 denotes a lifting cylinder to be described later.

Hereinafter, a structure of the mowing device 6, and the like will be described in detail.

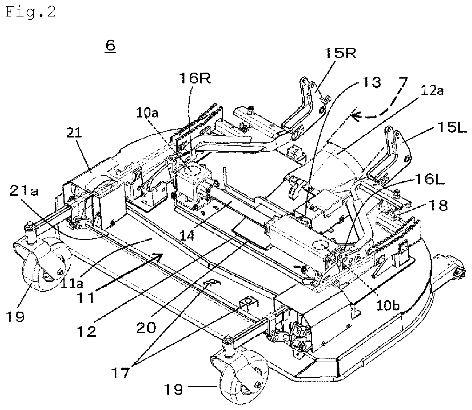

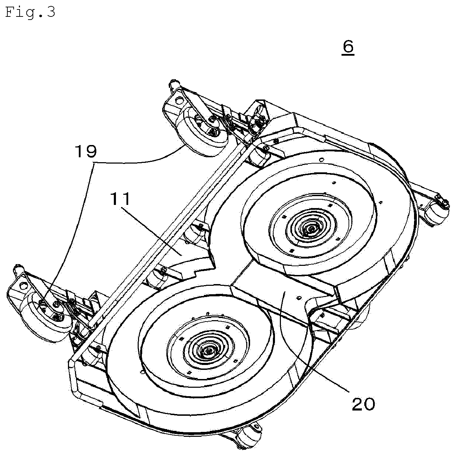

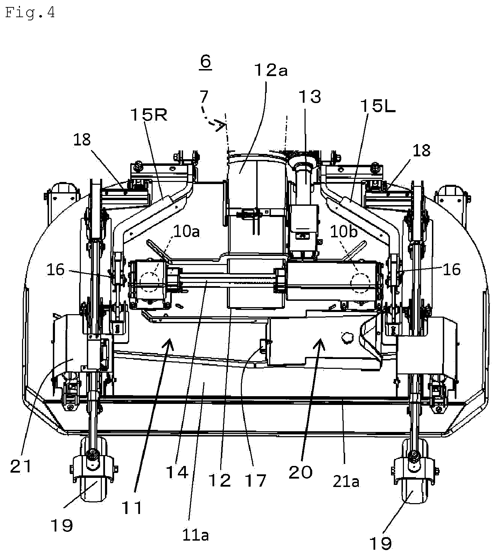

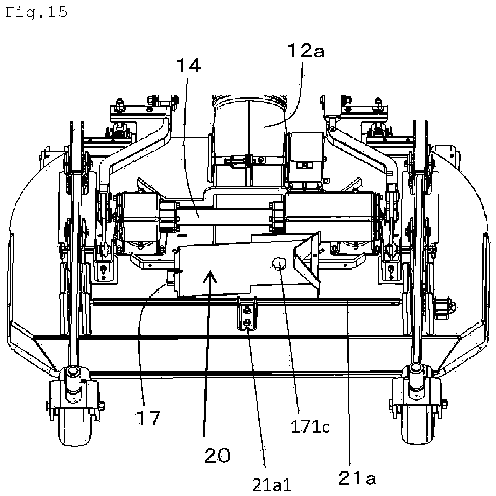

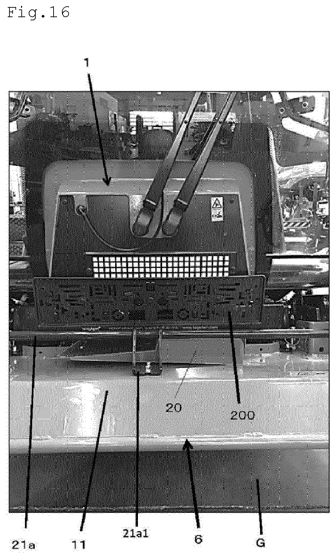

That is, FIG. 2 is a perspective view of the mowing device 6 according to the embodiment as viewed from above. FIG. 3 is a perspective view as viewed from below. FIG. 4 is a plan view of the mowing device 6. As shown in FIGS. 2, 3, and 4, the mowing device 6 includes a deck portion 11 at the center, front wheel portions 19 and 19 at the front side, and lifting arms 15R and 15L at a rear side. Reference numeral 21 denotes a mowing height adjustment mechanism. Reference numeral 21a denotes a left and right coupling shaft of the mowing height adjustment mechanism 21. Reference numeral 21a1 denotes a bracket that supports the left and right coupling shaft 21a at a substantially central position (see FIGS. 15 and 16).

In the deck portion 11, a plurality of cutting blades for mowing grass are accommodated on a lower side of a top surface 11a, and a power unit of the mowing device 6, the lifting arms 15R and 15L, and the like are disposed on an upper side of the top surface 11a in a state of being exposed to outside.

The power unit of the mowing device 6 includes power such as a motor. The motor is operated by a power source supplied from the main body 1 of the mower through a mower input shaft 13, so that the left and right cutting blades are rotated to mow the grass (Reference numerals 10a and 10b denote cutting blade rotation shafts). Reference numeral 14 denotes a cutting blade interlocking shaft for driving the cutting blades.

Rear ends of the lifting arms 15R and 15L provided on a rear upper side of the deck portion 11 are coupled to the main body 1 of the mower. The lifting arms 15R and 15L lift and lower the deck portion 11 by the lifting cylinder 205 by the power supplied from the main body 1. The mowing device 6 is lifted during non-operation such as traveling on a road, and is lowered during the grass mowing operation.

Front ends of the lifting arms 15R and 15L are rotatably coupled to the deck portion 11 by lifting arm coupling portions 16R and 16L. The lifting arms 15R and 15L are coupled to horizontal maintaining mechanisms 18 at intermediate positions.

Accordingly, the deck portion 11 is lifted and lowered while maintaining a horizontal state as the lifting arms 15R and 15L are lifted and lowered.

Further, the lifting arm coupling portions 16R and 16L of the lifting arms 15R and 15L for lifting and lowering the mowing device 6 as described above are provided as a pair on the left and right on the deck portion 11. Cover fixing portions 17 are provided between the pair of left and right lifting arm coupling portions 16R and 16L. As a result, a mulching cover 20 fixed to the cover fixing portions 17 during non-operation does not interfere with a lifting and lowering movement (interference of a link movement) of the mowing device 6.

In the embodiment shown in FIGS. 2, 3, and 4, the cover fixing portions 17 are provided at positions which are front positions of the deck portion 11 and on the left of the center position of the deck portion 11. Accordingly, interference with other members such as the license plate 200 described later can be avoided.

FIGS. 2 and 3 illustrate a state during a mulching operation, that is, a state in which the detachable mulching cover 20 is attached to an opening portion 12 and only the cover fixing portions 17 are seen on the top surface 11a. Further, FIG. 4 illustrates a state during a grass collecting operation, that is, a state in which the mulching cover 20 is removed from the opening portion 12 and fixed and stored on the cover fixing portions 17.

In the embodiment shown in FIGS. 2, 3, and 4, the cover fixing portions 17 are disposed in front of the cutting blade interlocking shaft 14. As a result, the mulching cover 20 can be fixed in an empty space of the mowing device 6.

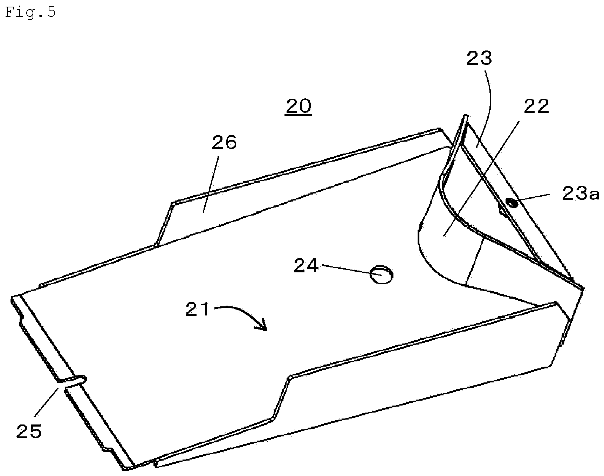

FIG. 5 is a perspective view illustrating an upsidedown state turned from a state of use of the mulching cover 20 during operation, that is, a stored state during non-operation. Here, reference numeral 21 denotes a top plate portion, and reference numeral 22 denotes a curved mowed grass branching portion which is provided at a rear end of the top plate portion 21 and returns the mowed grass into a rotating area of the cutting blades.

Reference numeral 23 denotes a bar bridged between lower ends of both ends of the mowed grass branching portion 22. A screw bolt 23a is attached to a center of the bar 23. The bar 23 is used to screw and fix the mulching cover 20 to the deck portion 11 side during operation. Reference numeral 26 denotes left and right walls erected on both left and right sides of the top plate portion 21, and denotes plates for dropping the mowed grass. In addition, the walls also have an effect of increasing the rigidity of the mulching cover 20.

Further, reference numeral 24 denotes a handle hole formed on the top plate portion 21. When the mulching cover 20 is attached to block the conveyance path 7 in order to perform the mulching operation, a finger is inserted into the handle hole 24 to hold and attach the mulching cover 20.

In addition, reference numeral 25 denotes a notch formed on a tip end side of the top plate portion 21, which is to be coupled to an inner fixing member 172 described later. Since a tip end portion of the mulching cover 20 serves as an insertion portion into the deck portion 11, there is no concern of reducing the effect of blocking the conveyance path 7 even when such a notch 25 is newly formed.

Next, a description will be given to the cover fixing portions 17 to which the mulching cover 20 is fixed during storage during non-operation.

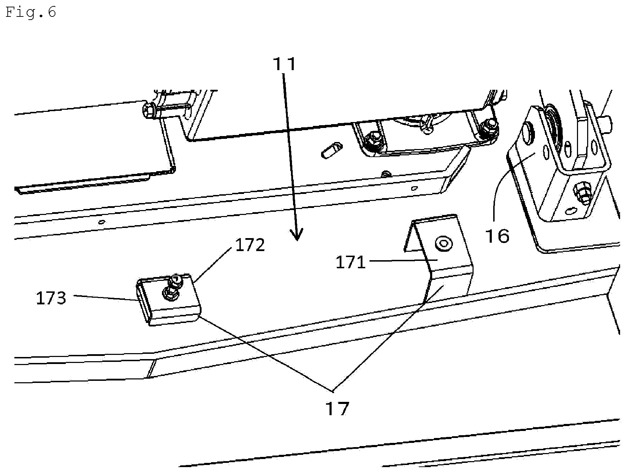

FIG. 6 is an enlarged perspective view of a front left side of the deck portion 11 as viewed from above. Reference numeral 171 denotes an outer fixing member, and reference numeral 172 denotes an inner fixing member. The handle hole 24 of the mulching cover 20 is fixed to the outer fixing member 171, and the notch 25 of the mulching cover 20 is fixed to the inner fixing member 172. That is, the top plate portion 21 of the mulching covers 20 is fixed at several sites.

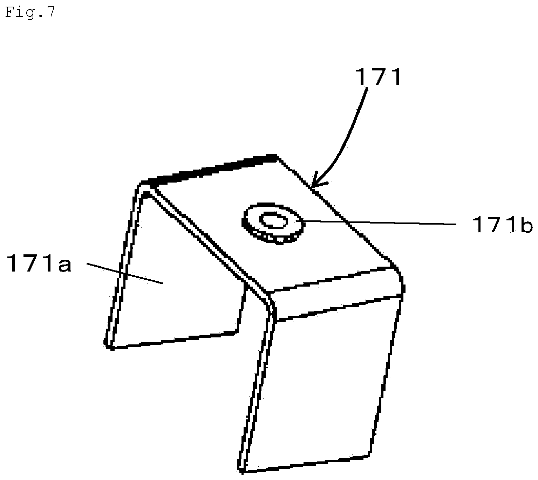

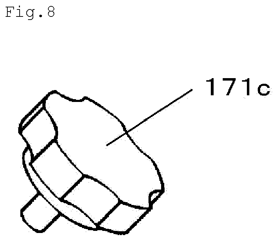

As shown in FIG. 7, the outer fixing member 171 includes a base 171a having a U-shaped cross section, a nut 171b provided at a center of an upper surface of the base 171a and having a tapped step, and a knob bolt 171c as shown in FIG. 8. By forming the step, it is possible to fix the position of the mulching cover 20 in front, rear, left, and right directions, and it is also possible to easily mount the mulching cover 20. The handle hole 24 of the mulching cover 20 is aligned with the nut 171b, and the mulching cover 20 is fixed by the knob bolt 171c. By using the knob bolt 171c, attachment and detachment become easier without using a tool.

In this way, since a hole on the mulching cover 20 side for fixing the mulching cover 20 to the outer fixing member 171 is also used as the handle hole 24, the following effects can be obtained. That is, since the mulching cover 20 is a member for blocking the conveyance path 7 in the first place, it is desirable to minimize the hole. Therefore, there is an advantage that the effect of blocking is not reduced by using the handle hole 24, which is opened in the related art, for fixation.

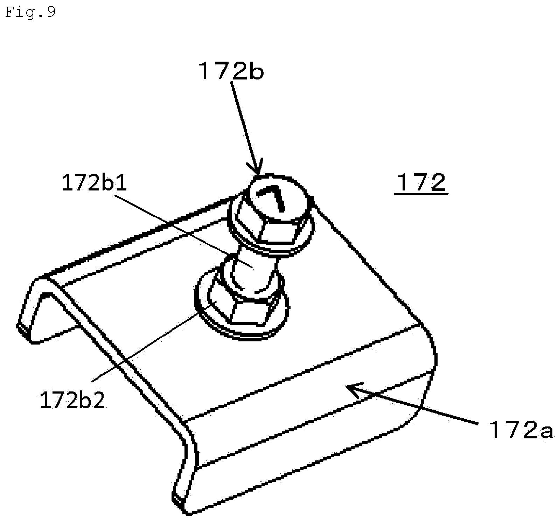

As shown in FIG. 9, the inner fixing member 172 includes a base 172a having a U-shaped cross section and a bolt-nut structure 172b provided at a center of an upper surface of the base 172a and adjustable in length. A nut 172b2 on a lower side of the bolt-nut structure 172b can be changed in height in a vertical direction. By fitting the notch 25 of the mulching cover 20 to a bolt 172b1 on an upper side, a position of the mulching cover 20 can be fixed. A height of the nut 172b2 on the lower side is adjusted, and then the bolt 172b1 on the upper side is tightened to complete the fixing in a state where the height is adjusted. According to the configuration in which the bolt 172b1 is sandwiched in the notch 25, it is possible to fix the mulching cover 20 without moving, and it is possible to prevent interference against vertical and horizontal shaking of the deck portion 11.

In the example described above, the fixing method is to fix at two positions, one on an outer side and one on an inner side and close to a central portion when a left-right direction is taken as reference, and a fixed height on the outer side is higher than a fixed height on the inner side.

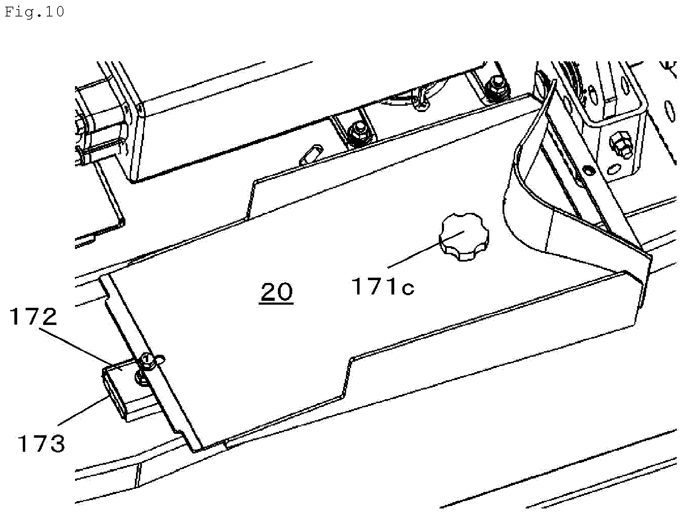

FIG. 10 is a perspective view illustrating a state in which the mulching cover 20 is fixed to the cover fixing portions 17 as described above during non-operation.

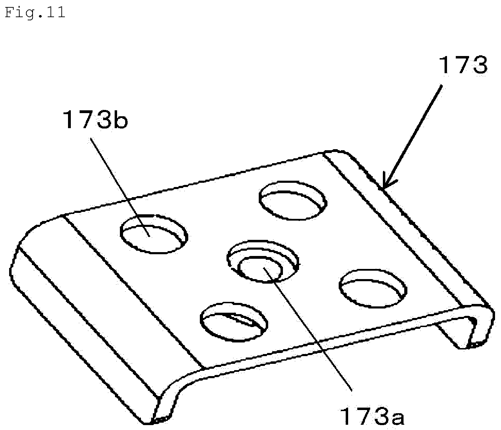

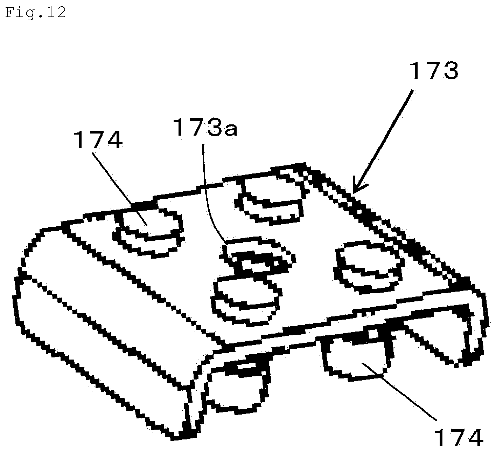

Next, an example of the inner fixing member 172 will be described. FIG. 11 illustrates a stock base 173 having a U-shaped cross section. A nut 173a is welded in center of the stock base 173 so that a lower end of the bolt 172b1 of the bolt-nut structure 172b can be screwed in. Four stock holes 173b are formed around the nut 173a. As shown in FIG. 12, shear pins 174 are inserted into the holes 173b to enable stocking. As the shear pins 174, for example, pins for determining a phase of a blade for preventing breakage of a gear box can be used. This is to enable immediate replacement when one shear pin 174 is broken during operation. In addition, loss of the shear pins 174 can be prevented.

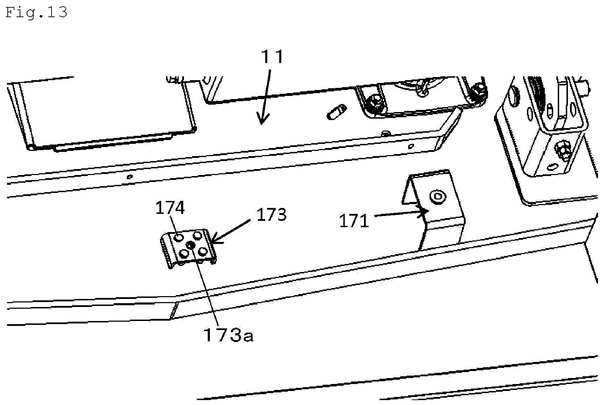

As shown in FIG. 13, such a stock base 173 is attached to the deck portion 11 such that the nut 173a at the center of the stock base 173 is aligned with the notch 25 at the tip end portion of the mulching cover 20.

Since the stock base 173 has a U-shaped cross section, a gap is formed between the stock base 173 and the top surface 11a of the deck portion 11. Therefore, when the shear pins 174 are difficult to be inserted or removed from the top (grass or pebbles are clogged between the stock base 173 and the top surface 11a), it is possible to support the insertion or removal through a lateral gap. This is to prevent the shear pins 174 from being clogged and unable to be inserted or removed. A direction of the gap is a frontrear direction as shown in FIG. 13.

The inner fixing member 172 having a U-shaped cross section is covered on the stock base 173 attached to a surface of the deck portion 11 in such a manner. Then, the lower end of the bolt 172b1 of the inner fixing member 172 is screwed into the nut 173a at the center of the stock base 173. In this case, the inner fixing member 172 is covered such that a direction in which the inner fixing member 172 is covered is orthogonal to the stock base 173. That is, the gap in the inner fixing members 172 is oriented in the left-right direction. FIGS. 6 and 10 are diagrams after such covering. By covering the inner fixing member 172 so as to be orthogonal to the stock base 173, the inner fixing member 172 can be prevented from idling when the notch 25 of the mulching cover 20 is fastened by the bolt 172b1.

In addition, since the inner fixing member 172 is covered so as to be orthogonal to the stock base 173, there is no concern that grass enters from either of the gaps, and it is not necessary to remove the inner fixing member 172 to clean the mower every time cleaning is performed.

Further, a height of the U-shaped base 172a of the inner fixing member 172 is higher than a height of the stock base 173. The height of the base 172a is set such that a lower end of the inner fixing member 172 comes into contact with the top surface 11a of the deck portion 11 and gaps are formed between the lower end of the inner fixing member 172 and heads of the shear pins 174 of the stock base 173 when the inner fixing member 172 is covered. There is a problem that in a case where the height of the base 172a is low and the inner fixing member 172 comes into contact with the shear pins 174 and gets on the shear pins 174, and in a case where the number of remaining shear pins 174 stocked is, for example, one, the inner fixing member 172 may incline. In order to avoid this problem, the height of the base 172a of the inner fixing member 172 is increased.

In such a configuration, the bolt 172b1 serves both to fix the inner fixing member 172 to the stock base 173 and to position the notch 25 of the mulching cover 20, and thus the effect of reducing the number of components can be obtained.

The fixed height of the handle hole 24 of the top plate portion 21 of the mulching cover 20 to the outer fixing member 171 is larger than the fixed height of the notch 25 of the top plate portion 21 of the mulching cover 20 to the inner fixing member 172.

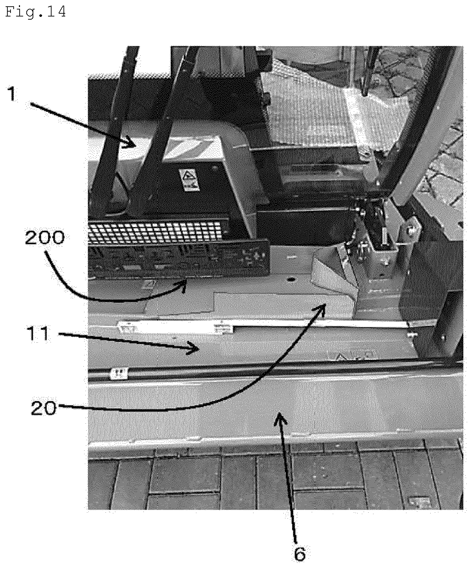

Accordingly, as shown in FIG. 14, when the deck portion 11 is placed in the maximally lifted position, interference with the license plate 200 of the main body 1 of the mower can be avoided.

In addition, since the cover fixing portions 17 are provided between the pair of left and right lifting arm coupling portions 16R and 16L, the mulching cover 20 can be fixed to the mowing device 6 without interfering with the lifting arms 15R and 15L and without hindering the lifting and the lowering of the mowing device 6.

Further, since the cover fixing portions 17 are disposed in front of the cutting blade interlocking shaft 14, the mulching cover 20 can be fixed in an empty space of the mowing device 6.

Next, a modification of the embodiment of the invention will be described.

In the modification, as shown in FIG. 15, the cover fixing portions 17 are provided substantially at the center of an area in front of the deck portion 11, and the mulching cover 20 fixed to the cover fixing portions 17 is also fixed at that position. This is effective when the mowing device 6 is small.

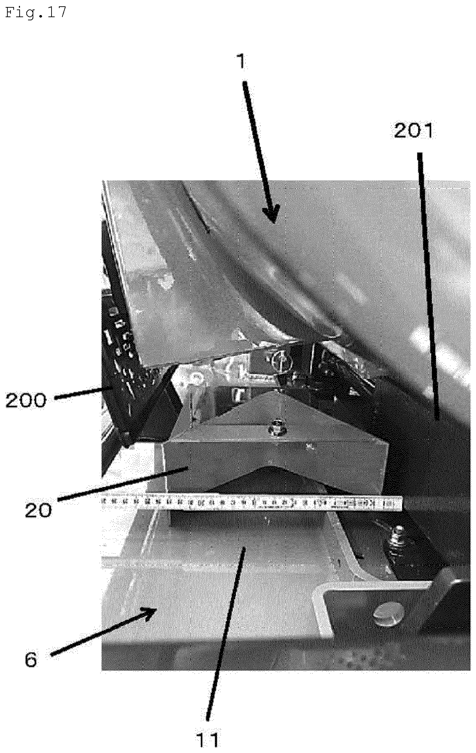

That is, as shown in FIGS. 16 and 17, even when the deck portion 11 is lifted, the mulching cover 20 is accommodated between the license plate 200 provided on the main body 1 side of the mower and the frame member 201 of the main body 1, and thus interference with the main body 1 can be avoided. In other words, the cover fixing portions 17 are disposed on the deck portion 11 so that when the deck portion 11 is lifted, the mulching cover 20 is accommodated between the license plate 200 and the frame member 201 of the main body 1. FIG. 17 is a side perspective view of the deck portion 11 as viewed from the left side to the right side, and illustrates a state in which the mulching cover 20 is accommodated between the license plate 200 and the frame member 201 of the main body 1.

According to the invention, it is possible to easily switch between a case of performing a mulching operation and a case of performing a grass collecting operation, and the invention is suitable for a mower.

In the related art, in a case of performing a grass collecting operation, no appropriate place is provided for a detached mulching cover. In many cases, the mulching cover is placed in a barn or the like. Therefore, in a case of switching to a mulching operation during a grass mowing operation, it is troublesome to go to the barn to get the mulching cover. Provided is a mower which includes a main body 1 of the mower, a mowing device 6, a grass collecting container 4, a conveyance path 7 from the mowing device 6 to the grass collecting container 4, and a detachable mulching cover 20 configured to block the conveyance path 7. The mowing device 6 is provided with a cover fixing portion 17 configured to fix the mulching cover 20 removed to open the conveyance path 7.

## Claims

1. A mower, comprising:
a conveyance path from a mowing device to a grass collecting container;
a detachable mulching cover configured to block the conveyance path; and
a cover fixing portion configured to fix the mulching cover removed to open the conveyance path.

2. The mower according to claim 1, wherein
a lifting arm configured to lift and lower the mowing device is coupled to a main body of the mower, and a pair of lifting arm coupling portions of the lifting arm to the mowing device are provided on left and right sides on the mowing device, and
the cover fixing portion is provided between the pair of left and right lifting arm coupling portions.

3. The mower according to claim 1 or 2, wherein
the mowing device has a plurality of cutting blades, and a cutting blade interlocking shaft configured to interlock the plurality of cutting blades is provided in an upper portion of the mowing device,
a mower input shaft extending from the main body of the mower is provided behind the cutting blade interlocking shaft, and
the cover fixing portion is provided in front of the cutting blade interlocking shaft.

4. The mower according to any one of claims 1 to 3, wherein
the cover fixing portion fixes the mulching cover on the mowing device at two positions, one on an outer side and one on an inner side and close to a central portion when a left-right direction is taken as reference, and a fixed height on the outer side is higher than a fixed height on the inner side.

5. The mower according to any one of claims 1 to 4, wherein
the mulching cover is disposed such that when the mowing device is lifted, a part of the mulching cover is positioned between a license plate in a front portion of the main body of the mower and a frame in the front portion of the main body of the mower.
